# EUROPEAN PATENT APPLICATION

(11) **EP 4 636 756 A1**
(43) Date of publication of application: **22.10.2025**
(21) Application number: 23902999.4
(22) Date of filing: 22.06.2023
(51) Int. Cl.: G10L 13/08, G10L 13/10, H04S 7/00, G06F 3/01, G06F 3/16

(54) **INFORMATION PROCESSING DEVICE, INFORMATION PROCESSING METHOD, AND PROGRAM FOR INFORMATION PROCESSING**

(30) Priority: 12.12.2022 JP 2022198149
(71) Applicant: Pioneer Corporation, Tokyo 113-0021 (JP)
(72) Inventor: OHASHI Satoshi, Tokyo 113-0021 (JP)
(74) Representative: Isarpatent
(86) International application number: PCT/JP2023/023136
(87) International publication number: WO 2024/127692

(57) **Abstract**

It is to provide an information processing device and the like capable of giving the user a feeling as if a feature that would not give a feeling of strangeness even when speaking the content of which the user is to be notified were actually speaking the content.

A feature that exists within a predetermined distance from the current location of the user and is permitted to issue an utterance of the content type of the content of which the user is to be notified is identified as an anthropomorphic feature on the basis of feature-related information in which content type information for permitting an utterance by a feature and location information about the feature are associated with each feature among a plurality of features, and the voice corresponding to the content is subjected to sound localization so as to be heard from the direction in which the anthropomorphic feature exists as viewed from the user, and is then output.

## Description

### Technical Field

The present application relates to a technical field of information processing devices and the like that anthropomorphize a feature and output a voice corresponding to content such as news.

### Background Art

Patent Literature 1 discloses an invention in which a type of human in a case where an object is anthropomorphized is set, and an explanation of the object is output by voice in words that are supposed to be spoken by a human of the type. Specifically, for an object, a gentlemanly male in his sixties is set as the type of human on the basis of the product name, the name, the date of manufacture, the country of production (production place), the functions/applications, the material, and the like of the object, and an explanation of the object is output by voice in words supposed to be spoken by a gentlemanly male in his sixties. Thus, the user who has listened to the explanation can feel as if the user were listening to the object's own voice.

### Citation List

### Patent Literature

Patent Literature 1: JP 2006-30464 A

### Summary of Invention

### Technical Problem

According to the invention disclosed in Patent Literature 1, the user can listen to an explanation of an object without a feeling of strangeness because the object speaks about itself. However, in a case where the user tries to cause a feature the user comes across while moving to speak some timely content (content that is preferable to be immediately conveyed to the user, such as a message "Good morning, happy birthday" or major news of the day) that is not about the object, a mismatch might occur between the content and the character of the feature, and the user might have a feeling of strangeness in a case where the feature speaks the content.

Therefore, in view of an example of such a problem, the present invention aims to provide an information processing device and the like capable of giving the user a feeling as if a feature that would not give a feeling of strangeness even when speaking the content of which the user is to be notified were actually speaking the content.

### Solution to Problem

An invention described in claim 1 is an information processing device comprising: a content acquisition unit that acquires content of which a user is to be notified, from among a plurality of pieces of content classified by content type;a user information acquisition unit that acquires current location information about the user;an anthropomorphic feature identification unit that identifies, as an anthropomorphic feature, a feature that exists within a predetermined distance from a current location of the user and is permitted to issue an utterance of a content type of the content acquired by the content acquisition unit, on a basis of feature-related information in which content type information for permitting an utterance by the feature and location information about the feature are associated with each of feature among a plurality of features; and an output control unit that performs control to have sound localization performed on a voice corresponding to the content acquired by the content acquisition unit so that the voice is heard from a direction in which the anthropomorphic feature exists as viewed from the user, and cause the voice to be output.

An invention described in claim 5 is a n information processing method implemented by an information processing device, the information processing method comprising: a content acquisition step of acquiring content of which a user is to be notified, from among a plurality of pieces of content classified by content type; a user information acquisition step of acquiring current location information about the user; an anthropomorphic feature identification step of identifying, as an anthropomorphic feature, a feature that exists within a predetermined distance from a current location of the user and is permitted to issue an utterance of a content type of the content acquired in the content acquisition step, on a basis of feature-related information in which content type information for permitting an utterance by the feature and location information about the feature are associated with each of feature among a plurality of features; and an output control step of performing control to have sound localization performed on a voice corresponding to the content acquired in the content acquisition step so that the voice is heard from a direction in which the anthropomorphic feature exists as viewed from the user, and cause the voice to be output.

An invention described in claim 6 is an information processing program for causing a computer in an information processing device to function as: a content acquisition unit that acquires content of which a user is to be notified, from among a plurality of pieces of content classified by content type; a user information acquisition unit that acquires current location information about the user; an anthropomorphic feature identification unit that identifies, as an anthropomorphic feature, a feature that exists within a predetermined distance from a current location of the user and is permitted to issue an utterance of a content type of the content acquired by the content acquisition unit, on a basis of feature-related information in which content type information for permitting an utterance by the feature and location information about the feature are associated with each of feature among a plurality of features; and an output control unit that performs control to have sound localization performed on a voice corresponding to the content acquired by the content acquisition unit so that the voice is heard from a direction in which the anthropomorphic feature exists as viewed from the user, and cause the voice to be output.

### Brief Description of The Drawings

Fig. 1 is a block diagram illustrating an example configuration of an information processing device 100 according to an embodiment.
Fig. 2 is a block diagram illustrating an example configuration of an on-vehicle device 200 according to a first embodiment.
Fig. 3 is a diagram illustrating an example of a feature table 230 according to the first embodiment.
Fig. 4 is a diagram illustrating an example of a content type table 240 according to the first embodiment.
Fig. 5 is a diagram illustrating an example of a content table 250 according to the first embodiment.
Fig. 6 is a schematic diagram illustrating an example of the positions of speakers 217A to 217H of a vehicle RC according to the first embodiment.
Fig. 7 is a diagram illustrating an example of a positional relationship between the vehicle RC and features F1 to F5 in the first embodiment.
Fig. 8 is a flowchart illustrating an example of an anthropomorphic feature utterance process (pattern 1) to be performed by the on-vehicle device 200 according to the first embodiment.
Fig. 9 is a flowchart illustrating an example of an anthropomorphic feature utterance process (pattern 2) to be performed by the on-vehicle device 200 according to the first embodiment.
Fig. 10 is a flowchart illustrating an example of an anthropomorphic feature utterance process (pattern 3) to be performed by the on-vehicle device 200 according to the first embodiment.
Fig. 11 is a block diagram illustrating an example configuration of a smartphone 400 according to a second embodiment.

### Embodiment for Carrying Out The Invention

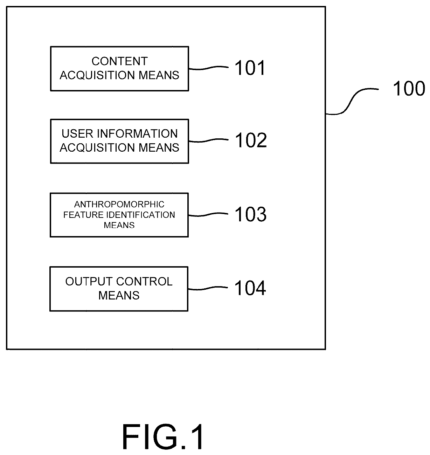

A mode for carrying out the present invention is described with reference to Fig. 1.

As illustrated in Fig. 1, an information processing device 100 includes a content acquisition unit 101, a user information acquisition unit 102, an anthropomorphic feature identification unit 103, and an output control unit 104.

The content acquisition unit 101 acquires content of which the user is to be notified, from among a plurality of pieces of content classified by content type.

The user information acquisition unit 102 acquires current location information about the user.

The anthropomorphic feature identification unit 103 identifies, as an anthropomorphic feature, a feature that exists within a predetermined distance from the current location of the user and is permitted to issue an utterance of the content type of the content acquired by the content acquisition unit 101, on the basis of feature-related information in which content type information for permitting an utterance by a feature and location information about the feature are associated with each feature among a plurality of features.

The output control unit 104 performs control to have sound localization performed on the voice corresponding to the content acquired by the content acquisition unit 101 so that the voice can be heard from the direction in which the anthropomorphic feature exists as viewed from the user, and causes the voice to be output.

By the information processing device 100, the voice corresponding to the content of which the user is to be notified, which is of the content type for which an utterance is permitted for the feature, is output from the direction in which the feature exists as viewed from the user. Thus, it is possible to give the user a feeling as if a feature that would not give a feeling of strangeness even when speaking the content of which the user is to be notified were actually speaking the content.

### Embodiments

### [1. First Embodiment]

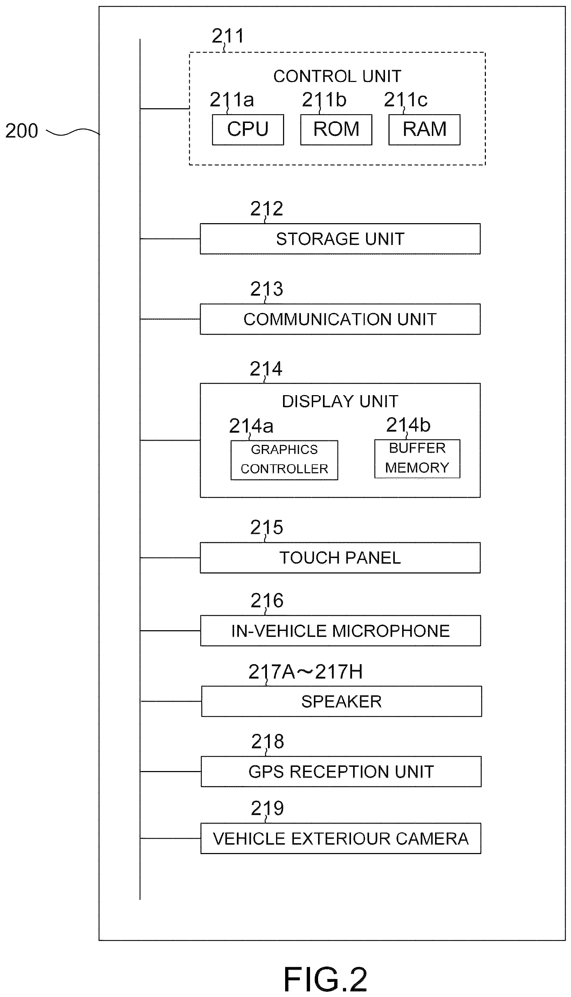

A first embodiment is described with reference to Figs. 2 to 8.

### [1.1. Outline of an On-Vehicle Device 200]

An outline of an on-vehicle device 200 that is an example of the information processing device 100 is described. The on-vehicle device 200 is mounted on a vehicle RC. The on-vehicle device 200 acquires content of which the user who is an occupant of the vehicle RC is to be notified from among a plurality of pieces of content (current news, congratulatory messages, recommendation information, and the like) classified by content type, identifies one feature existing within the range visible to the user as an anthropomorphic feature, performs sound localization on the voice corresponding to the acquired content so that the voice can be heard from the direction in which the anthropomorphic feature exists as viewed from the user, and outputs the voice from a speaker. That is, the on-vehicle device 200 anthropomorphizes features existing here and there, and gives the user a feeling as if the features are reading the text corresponding to the content.

### [1.2. Configuration of the On-Vehicle Device 200]

Referring to Fig. 2, the configuration of the on-vehicle device 200 that is an example of the information processing device 100 is described. Fig. 2 is a block diagram illustrating an example configuration of the on-vehicle device 200.

The on-vehicle device 200 includes a control unit 211, a storage unit 212 formed with a hard disk drive (HDD), a solid-state drive (SSD), or the like, a communication unit 213, a display unit 214, a touch panel 215, an in-vehicle microphone 216, speakers 217A to 217H, and a global positioning system (GPS) reception unit 218.

The control unit 211 includes a CPU 211a that controls the entire control unit 211, a ROM 211b in which a control program and the like for controlling the control unit 211 are stored in advance, and a RAM 211c that temporarily stores various kinds of data. The control unit 211 or the CPU 211a corresponds to a "computer".

The control unit 211 performs processes (including an anthropomorphic feature utterance process to be described later) related to a search for a route to a destination of the vehicle RC in accordance with an input operation by the user, control for causing an anthropomorphic feature to virtually utter the content of which the user is to be notified (an occupant of the vehicle RC), and the like.

The storage unit 212 stores various programs such as an operating system (OS) and application programs, and data and information to be used in the various programs. Also, the storage unit 212 stores a program for analyzing the voice of the user input to the in-vehicle microphone 216, and interprets and copes with the content of the utterance. Note that the various programs may be acquired from a server device or the like via a network, for example, or may be read from a recording medium such as a USB memory.

The storage unit 212 stores map data. The map data includes information necessary for the control unit 211 to perform processes related to a search for a route to a destination of the vehicle RC, guidance at an intersection on the route, and the like. For example, the map data includes intersection data indicating the locations, shapes, names, and the like of intersections, road link data (including gradient information), and feature data related to facilities and the like. Also, the storage unit 212 stores congestion information, weather information, and the like acquired via the communication unit 213.

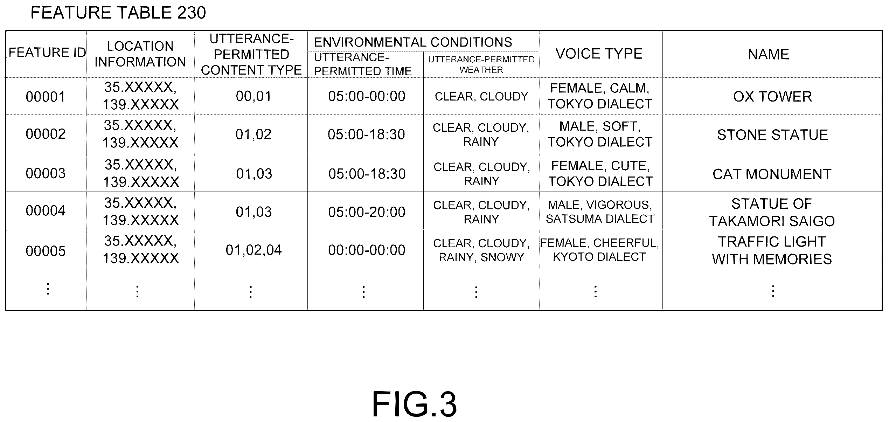

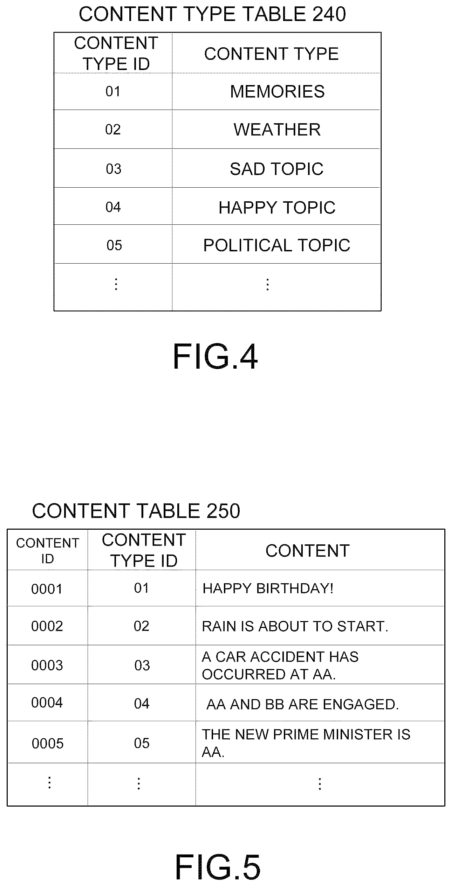

The storage unit 212 stores a feature table 230 illustrated in Fig. 3, a content type table illustrated in Fig. 4, and a content table 250 illustrated in Fig. 5.

The feature table 230 illustrated in Fig. 3 stores information regarding a plurality of features. Features are natural or artificial objects having location information (buildings, mountains, trees, bronze statues, traffic lights, and the like, for example), and the feature table 230 stores information regarding a plurality of features among them. In the feature table 230, feature information indicating "feature IDs", "locations", "utterance-permitted content types", "environmental conditions" (including "utterance-permitted times" and "utterance-permitted weathers"), "voice types", and "names" of the features registered by the manufacturer, the user, or the like of the on-vehicle device 200 is registered. The "feature IDs" are identifiers for identifying the features.

The data registration in the feature table 230 can also be performed by the user, and the user can register features with the user's own memories (the hospital in which the user was born and a pedestrian bridge the user once crossed with his/her lover, for example) and the like.

In the "locations", the latitudes, longitudes, and altitudes of the features are registered.

In the "utterance-permitted content types", content type IDs indicating the content types of content permitted for the features to utter are registered (the content types and the content type IDs will be described later).

The "environmental conditions" (an example of "environmental condition information") includes "utterance-permitted times" and "utterance-permitted weathers", and indicates environmental conditions under which the user can visually recognize the features.

In the "utterance-permitted times", the time slots during which utterances of the features are permitted are registered. In the "utterance-permitted times", the time slots during which the user can visually recognize the features are registered. That is, the time slots that take into consideration the environments around the features and the presence or absence of lights for the features are registered. For example, a time slot from sunrise to sunset may be registered for a feature existing in a place where there are no lights nearby and it is dark at night. On the other hand, in a case where there are lights nearby, there are lights for the feature, or the feature emits light, a time slot during which these lights and the like are on may be set as the "utterance-permitted time".

In the "utterance-permitted weathers", the weathers in which utterances of the features are permitted are registered. In the "utterance-permitted weathers", the time weathers in which the user can visually recognize the features are registered. For example, a high-rise tower, a high-rise apartment, and the like might not be clearly visible in a rainy, snowy, or foggy weather, and therefore, clear and cloudy weathers may be set as the "utterance-permitted weathers" for such features.

In the "voice types", the types of voices in a case where the features are anthropomorphized are registered. In the "voice types", information indicating the characteristics of voices such as genders (male/female), tones (calm, slow, cute, powerful, bright, and the like), and dialects (such as the Tokyo dialect, the Satsuma dialect, the Kyoto dialect, and the Tohoku dialect) is registered, for example. Note that voice characteristics data corresponding to the respective voice types is stored in the storage unit 212, and voice data is generated by synthesizing text corresponding to the content on the basis of the voice characteristics data. For example, in a case where the "voice type" indicates "woman, cute, Kyoto dialect", voice data for reading the text corresponding to the content with the Kyoto dialect in a cute voice of a woman is generated on the basis of the voice characteristics data from which a voice of a woman speaking with a cute Kyoto dialect can be generated.

In the "names", the names of the features are registered. In the "names", official names may be registered, or, in a case where the user registers a feature, the user may register any desired name.

The content type table 240 illustrated in Fig. 4 stores content type information regarding content types. Specifically, information indicating "content type IDs" and "content types" is registered in the content type table 240. The "content types" are the types of content of which the user is to be notified, and indicates the topics of the content as an example. For example, there are memories, weathers, sad topics, happy topics, political problems, and the like. The "content type IDs" are identifiers for identifying the content types.

The "content type IDs" are registered in the "utterance-permitted content types" in the feature table 230. In the example in Fig. 3, "00" and "01" are registered as the "utterance-permitted content types" for the feature (OX tower) with the "feature ID" of "00001", and accordingly, an utterance about content whose "content type" is memories or weather is permitted. Note that the manufacturer, the user, or the like can determine which content type is to be set as the "utterance-permitted content type" for each feature.

The content table 250 illustrated in Fig. 5 stores information regarding content to be provided to the user. Specifically, information indicating "content IDs", "content type IDs", and "content" is registered in the content type table 240. The "content IDs" are identifiers for identifying content. As the "content", current news, a congratulatory message to the user, recommendation information for the user, weather information, and the like are registered in a text format, for example. The current news and the weather information may be acquired from an external content providing server and be registered. A congratulatory message for the user may be generated by the on-vehicle device 200 on the basis of the birthday, the wedding day, or the like of the user registered in advance, or may be a message that has been generated by an external server and been acquired, prior to registration. Recommendation information for the user may be generated by the on-vehicle device 200 on the basis of the preferences of the user registered in advance or an action history of the user, or may be information that has been generated by an external server and been acquired, prior to registration.

The communication unit 213 includes a wireless communication device or the like, and communicates with an information processing device such as a server device or a smartphone having an external communication function, to mutually transmit and receive data.

The display unit 214 includes a graphics controller 214a and a buffer memory 214b formed with a memory such as a video RAM (VRAM). In this configuration, the graphics controller 214a controls the display unit 214 and the touch panel 215, on the basis of control information sent from the control unit 211. Meanwhile, the buffer memory 214b temporarily stores image data that can be immediately displayed on each touch panel 215. An image is then displayed on the touch panel 215, on the basis of the image data output from the graphics controller 214a.

The touch panel 215 displays an image on the basis of the image data received from the display unit 214. Also, the touch panel 215 detects the user's touch operation, and transmits touch operation data indicating the touched position or the like to the control unit 211. The control unit 211 determines which operation has been performed on the basis of the touch operation data, and performs processing in accordance with the operation content.

The in-vehicle microphone 216 is provided in the vehicle, converts the voice of the user in the vehicle into an electrical signal, and outputs the electrical signal to the control unit 211.

The speakers 217A to 217H are provided in the vehicle, and output sound under the control of the control unit 211. Note that, hereinafter, the speakers 217A to 217H will be sometimes collectively referred to as the speakers 217.

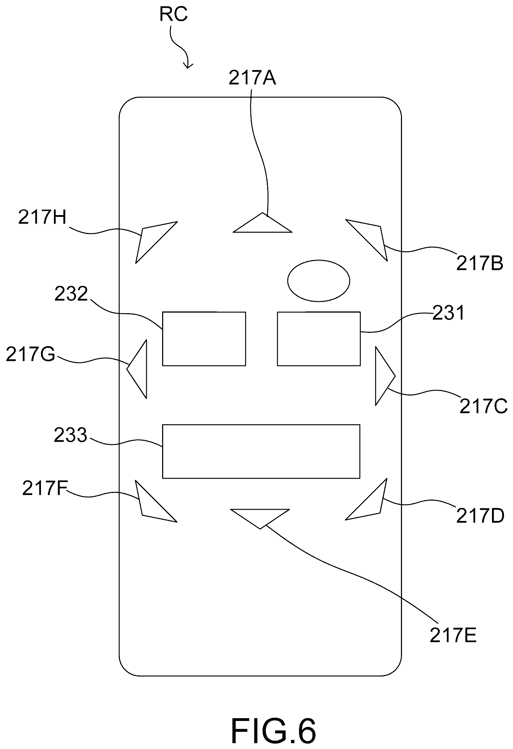

Referring now to Fig. 6, the arrangement of the speakers 217A to 217H is described. Fig. 6 is a schematic diagram illustrating an example of the positions of the speakers 217A to 217H of the vehicle RC in which the on-vehicle device 200 is mounted. The vehicle RC is a real vehicle the user is in, and includes a driver's seat 231, a passenger seat 232, and a rear seat 233. In the vehicle RC, the eight speakers 217A to 217H and the on-vehicle device 200 not illustrated in the drawing (here, the speakers 217A to 217H are excluded) are mounted. On the front side of the vehicle interior of the vehicle RC, the speakers 217H, 217A, and 217B are installed in this order from the left. Also, the speaker 217G is installed on the left side of the vehicle interior, and the speaker 217C is installed on the right side of the vehicle interior. Further, on the rear side of the vehicle interior, the speakers 217F, 217E, and 217D are installed in this order from the left.

Note that, in the present embodiment, the CPU 211a performs a process for realizing sound localization by the speakers 217A to 217H. That is, the CPU 211a realizes the sound localization of the voice corresponding to the content that an anthropomorphic feature virtually utters. Also, with movement of the vehicle RC, the sound localization of the voice is displaced to provide the user with an experience as if the anthropomorphic feature were talking at the same place. Note that the process for realizing the sound localization by the speakers 217A to 217H may be performed by an audio processor or the like provided separately from the CPU 211a.

The GPS reception unit 218 receives navigation radio waves from a GPS satellite, acquires GPS positioning data that are latitude, longitude, and altitude data, absolute orientation data of the traveling direction, GPS speed data, and the like, which are current location information about the on-vehicle device 200, and outputs the acquired data to the control unit 211.

A vehicle exterior camera 219 is mounted on the vehicle RC, captures an image of the surroundings of the vehicle RC, and outputs the camera image to the control unit 211.

### [1.3. Anthropomorphic Feature Utterance Process]

Next, an anthropomorphic feature utterance process to be performed by the control unit 211 is described. In the anthropomorphic feature utterance process, an anthropomorphic feature to be made to virtually utter the voice corresponding to content is identified from among a plurality of features. In the present embodiment, three patterns of methods for identifying an anthropomorphic feature are described. The three patterns are "a pattern in which an anthropomorphic feature is identified by an utterance-permitted content type (pattern 1)", "a pattern in which an anthropomorphic feature is identified by an utterance-permitted time and an utterance-permitted weather (pattern 2)", and "a pattern in which an anthropomorphic feature is identified by a camera image (pattern 3)". Pattern 2 and pattern 3 are examples of methods for identifying, as an anthropomorphic feature, a feature visible in the current situation from the current location of the user among a plurality of features.

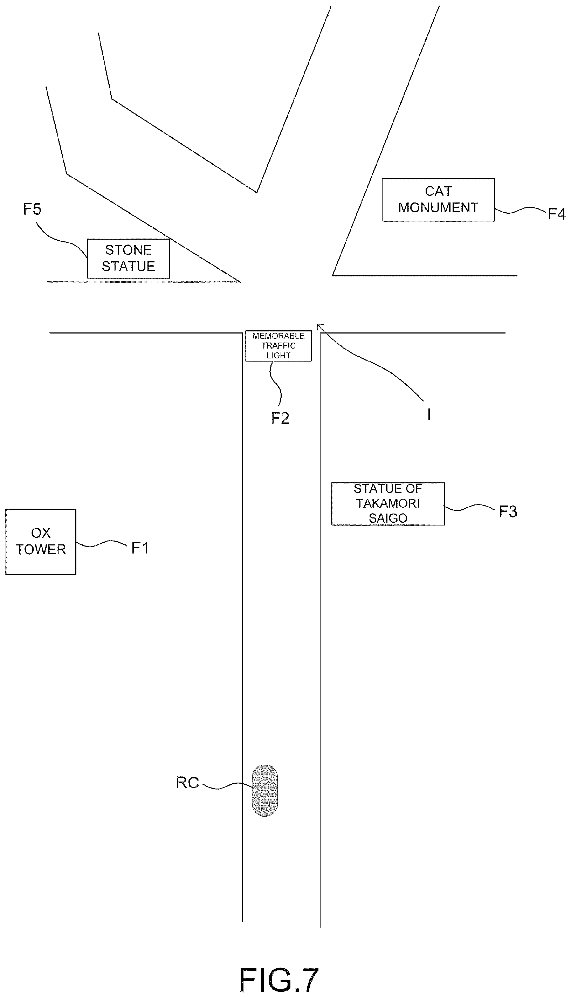

Note that, in a state in which the feature table 230 illustrated in Fig. 3, the content type table 240 illustrated in Fig. 4, and the content table 250 illustrated in Fig. 5 are stored in the storage unit 212, it is herein assumed that an OX tower F1, a memorable traffic light F2, a statue of Takamori Saigo F3, a cat monument F4, and a stone statue F5 exist in the traveling direction of a running vehicle RC, as illustrated in Fig. 7. Also, it is assumed that the control unit 211 has acquired, from the content table 250, the content with the content ID "0003" ("A car accident has occurred at AA.") as the content of which the user is to be notified.

### [1.3.1. Pattern 1: Identification of an Anthropomorphic Feature by an Utterance-Permitted Content Type]

In pattern 1, the control unit 211 identifies, as an anthropomorphic feature, a feature that exists within a predetermined distance from the current location of the user and is permitted to issue an utterance of the content type of the acquired content, on the basis of the feature table 230 (an example of the "feature-related information") in which an utterance-permitted content type (an example of the content type information for permitting an utterance by a feature) and a location (an example of the "location information about the feature") are associated with each feature among a plurality of features.

For example, in a case where the control unit 211 has found the OX tower F1, the memorable traffic light F2, and the statue of Takamori Saigo F3 as features within a predetermined distance (150 m, for example) from the current location of the user, the control unit 211 acquires the utterance-permitted content for each of the features from the feature table 230 (see Fig. 3). Specifically, "00" and "01" are acquired as the utterance-permitted content types for the OX tower F1, "01", "02", and "04" are acquired as the utterance-permitted content types for the memorable traffic light F2, and "01" and "03" are acquired as the utterance-permitted content types for the statue of Takamori Saigo F3. The control unit 211 then acquires the content type "03" of the content with the content ID "0003" from the content table 250 (see Fig. 5), and identifies, as an anthropomorphic feature, the statue of Takamori Saigo F3 having the content type "03" registered as an utterance-permitted content type.

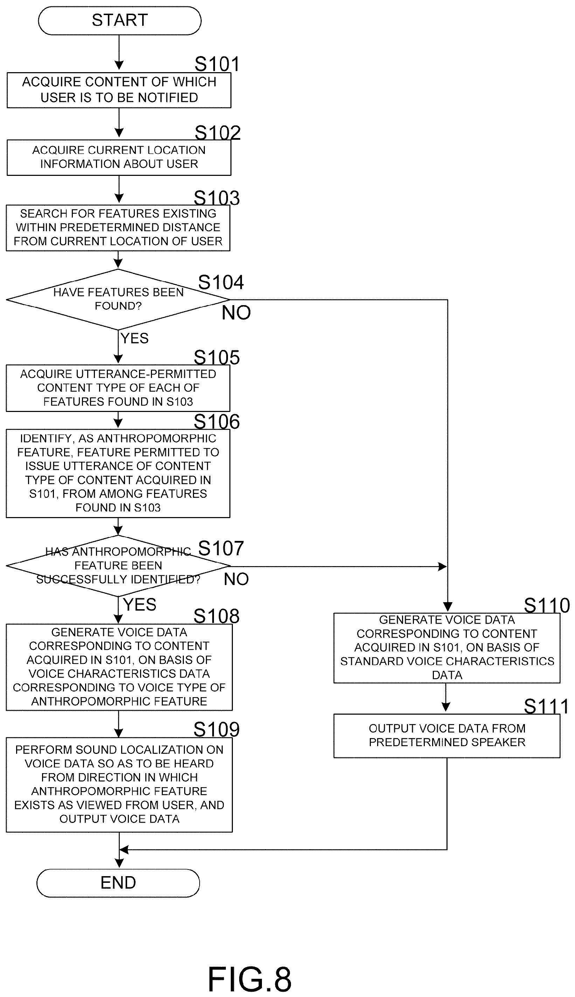

Here, an anthropomorphic feature utterance process in a case where the method for identifying an anthropomorphic feature is of pattern 1 is described with reference to a flowchart in Fig. 8.

First, the control unit 211 acquires, from the content table 250, the content of which the user is to be notified (step S101). At this point of time, the control unit 211 can acquire any content, but may acquire content in accordance with a priority order that has been set beforehand by the manufacturer or the user, for example. For example, a priority order of content type IDs may be set, and content that is high in the priority order may be acquired, or content whose content registration date is earlier (or later) may be acquired first. Alternatively, the attributes (gender, age, preferences, and the like) of the user may be registered, and the attribute suitable for each piece of content may be registered so that the control unit 211 can acquire the content suitable for the attributes of the user.

Next, the control unit 211 acquires current location information about the user (the vehicle RC) (step S102). Specifically, the control unit 211 acquires current location information (latitude, longitude, and altitude data, absolute orientation data of the traveling direction, and GPS speed data) received from the GPS reception unit 218.

Next, the control unit 211 searches for a feature existing within a predetermined distance from the current location of the user (step S103). Note that the predetermined distance can be set by the manufacturer or the user, on the basis of the feature density (the number of features in the region) or the like in the region in which the vehicle RC is traveling. The feature to be searched for is a feature registered in the feature table 230, and the control unit 211 determines whether the feature exists within the predetermined distance on the basis of the current location of the vehicle RC and the location information about each of the features registered in the feature table 230.

Next, the control unit 211 determines whether a feature has been found in the process in step S103 (step S104). If the control unit 211 determines that a feature has been found in the process in step S103 (step S104: YES), the control unit 211 proceeds to the process in step S105. If the control unit 211 determines that any feature has not been found in the process in step S103 (step S104: NO), on the other hand, the control unit 211 proceeds to the process in step S110.

In a case where the result of the determination in the process in step S104 is "YES", the control unit 211 then acquires, from the feature table 230, the utterance-permitted content type of each of the features found in the process in step S103 (step S105).

Next, the control unit 211 identifies, as an anthropomorphic feature, the feature for which an utterance of the content type of the content acquired in the process in step S101 is permitted, from among the features found in the process in step S103 (step S106). That is, the control unit 211 identifies, as an anthropomorphic feature, the feature whose content type of the content acquired in the process in step S101 is registered as an utterance-permitted content type. Note that, in a case where there are a plurality of features identified as anthropomorphic features, one feature is identified in accordance with the preset priority order. The priority order may be set by the manufacturer or the user so that the feature closest to the current location, the feature having the smallest feature ID, or the like is prioritized, for example.

Next, the control unit 211 determines whether an anthropomorphic feature has been successfully identified in the process in step S106 (step S107). If the control unit 211 determines that any anthropomorphic feature has not been successfully identified (or there are no features whose registered utterance-permitted content types are not the content type of the content acquired in the process in step S101) (step S107: NO), the control unit 211 proceeds to the process in step S110.

If the control unit 211 determines that an anthropomorphic feature has been successfully identified (step S107: YES), on the other hand, the control unit 211 then generates voice data corresponding to the content acquired in the process in step S101, on the basis of the voice characteristics data corresponding to the voice type of the anthropomorphic feature (step S108). That is, the control unit 211 identifies the voice type of the anthropomorphic feature from the feature table 230, acquires the voice characteristics data corresponding to the voice type from the storage unit 212, and generates voice data by synthesizing text corresponding to the content acquired in the process in step S101 on the basis of the voice characteristics data.

Next, the control unit 211 performs control to have sound localization performed on the voice data generated in the process in step S108 so that the voice data can be heard from the direction in which the anthropomorphic feature exists as viewed from the user, and then output the voice data from a speaker 217, and ends the anthropomorphic feature utterance process. The direction in which the anthropomorphic feature exists as viewed from the user is determined on the basis of the current location of the user (the vehicle RC) and the location of the anthropomorphic feature. Note that, in a case where the user (the vehicle RC) is moving, the direction in which the voice is heard also changes accordingly.

In a case where the result of the determination in step S104 or step S107 is "NO", the control unit 211 then generates voice data corresponding to the content acquired in the process in step S101, on the basis of standard voice characteristics data (step S110). It is assumed that the standard voice characteristics data is data from which voice data of a calm utterance of text with the Tokyo dialect (of any gender) can be generated, and is stored in the storage unit 212.

Next, the control unit 211 causes a predetermined speaker 217 to output the voice data generated in the process in step S110, and ends the anthropomorphic feature utterance process. The predetermined speaker 217 can be a speaker 217 (the front speaker 217A, for example) set by the user in advance.

### [1.3.2. Pattern 2: Identification of an Anthropomorphic Feature by an Utterance-Permitted Time and an Utterance-Permitted Weather]

In pattern 2, the control unit 211 identifies, as an anthropomorphic feature, a feature that exists within a predetermined distance from the current location of the user and is permitted to utter at the time and in the weather at that time, on the basis of a feature table (an example of the "feature-related information") in which environmental conditions (an example of the "environmental condition information") including at least one of an utterance-permitted time (an example of "time conditions for permitting an utterance") and an utterance-permitted weather (an example of "weather conditions for permitting an utterance"), and a location (an example of the "location information") are associated with each feature among a plurality of features. Note that the environmental conditions are conditions serving as the reference for determining whether a feature is visible (whether it is easy to see). Although a case where a feature satisfying both conditions indicating the utterance-permitted time and the utterance-permitted weather as the environmental conditions is identified is described herein, a feature satisfying either the utterance-permitted time or the utterance-permitted weather as the environmental condition may be identified as an anthropomorphic feature.

For example, in a case where the OX tower F1, the memorable traffic light F2, and the statue of Takamori Saigo F3 exist within a predetermined distance (150 m, for example) from the current location of the user, the control unit 211 acquires an utterance-permitted time and an utterance-permitted weather for each of the features from the feature table 230 (see Fig. 3). Specifically, "05:00-00:00 (5:00 AM to 0:00 AM)" is acquired as the utterance-permitted time and "clear" and "cloudy" are acquired as the utterance-permitted weathers for the OX tower F1, "00:00-00:00 (24 hours)" is acquired as the utterance-permitted time and "clear", "cloudy", "rainy", and "snowy" are acquired as the utterance-permitted weathers for the memorable traffic light F2, "05: 00-20:00 (5:00 AM to 8:00 PM)" is acquired as the utterance-permitted time and "clear", "cloudy", and "rainy" are acquired as the utterance-permitted weathers for the statue of Takamori Saigo F3. If the current time is "15: 00", and the weather is "snowy", for example, the control unit 211 then identifies, as an anthropomorphic feature, the memorable traffic light F2 that has "00:00-00:00 (24 hours)" registered as the utterance-permitted time, and has "clear", "cloudy", "rainy", and "snowy" weathers registered as the utterance-permitted weathers.

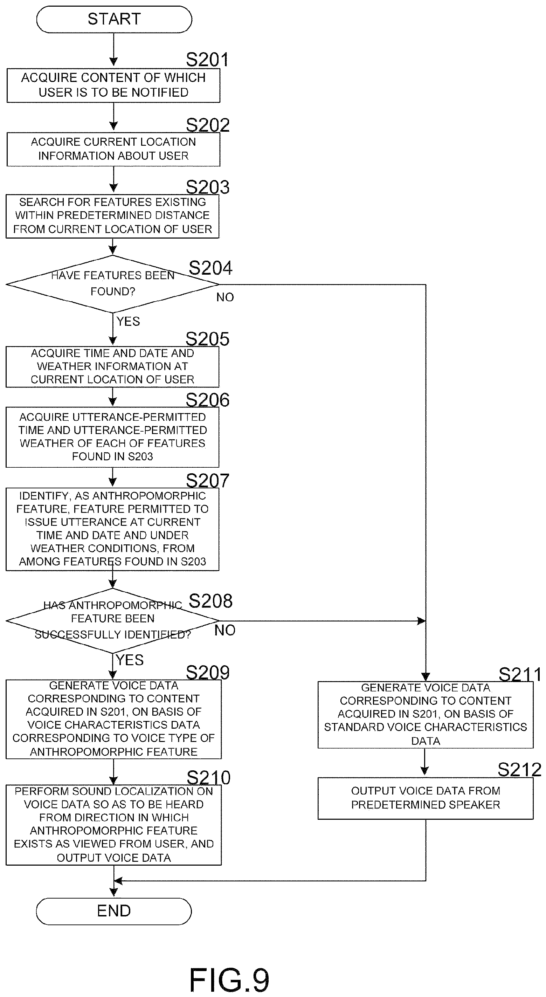

Here, an anthropomorphic feature utterance process in a case where the method for identifying an anthropomorphic feature is of pattern 2 is described with reference to a flowchart in Fig. 9. Note that steps S201 to S204 in Fig. 9 are the same as steps S101 to S104 in Fig. 8, steps S209 to S212 in Fig. 9 are also the same as steps S108 to S111 in Fig. 8 (except that step S201 is read as step S101), and therefore, explanation thereof is not made herein.

In a case where the result of the determination in the process in step S204 is "YES", the control unit 211 acquires the time and date and the weather information at the current location of the user (step S205). For example, the control unit 211 acquires the system time of the on-vehicle device 200 as the time and date, and acquires the weather from an external server.

Next, the control unit 211 acquires, from the feature table 230, the utterance-permitted time and the utterance-permitted weathers of each of the features found in the process in step S203 (step S206).

Next, the control unit 211 identifies, as an anthropomorphic feature, the feature for which an utterance is permitted at the current time and date and in the weather conditions, from among the features found in the process in step S203 (step S207). That is, the control unit 211 identifies, as an anthropomorphic feature, the feature whose time and date and weather acquired in the process in step S205 satisfy the conditions of the utterance-permitted time and the utterance-permitted weather, respectively. Note that, in a case where there are a plurality of features identified as anthropomorphic features, one feature is identified in accordance with the preset priority order. The priority order may be set by the manufacturer or the user so that the feature closest to the current location, the feature having the smallest feature ID, or the like is prioritized, for example.

Next, the control unit 211 determines whether an anthropomorphic feature has been successfully identified in the process in step S207 (step S208). If the control unit 211 determines that any anthropomorphic feature has not been successfully identified (or there are no features whose time and date and weather acquired in the process in step S205 satisfy the conditions of the utterance-permitted time and the utterance-permitted weather, respectively.) (step S208: NO), the control unit 211 proceeds to the process in step S211. If the control unit 211 determines that an anthropomorphic feature has been successfully identified (step S208: YES), on the other hand, the control unit 211 proceeds to the process in step S209.

### [1.3.3. Pattern 3: Identification of an Anthropomorphic Feature by a Camera Image]

In pattern 3, a feature that can be recognized from the current location of the user in a camera image captured by the vehicle exterior camera 219 is identified as an anthropomorphic feature.

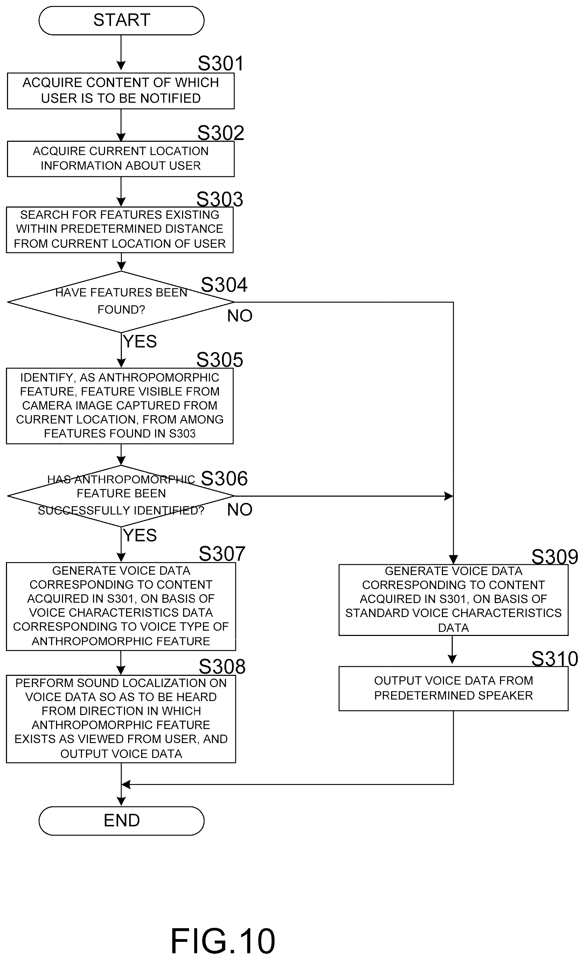

Here, an anthropomorphic feature utterance process in a case where the method for identifying an anthropomorphic feature is of pattern 3 is described with reference to a flowchart in Fig. 10. Note that steps S301 to S304 in Fig. 10 are the same as steps S101 to S104 in Fig. 8, steps S307 to S310 in Fig. 10 are also the same as steps S108 to S111 in Fig. 8 (except that step S301 is read as step S101), and therefore, explanation thereof is not made herein.

In a case where the result of the process in step S304 is "YES", the control unit 211 identifies, as an anthropomorphic feature, a feature visible in a camera image captured from the current location from among the features found in the process in step S303 (step S305). For example, the control unit 211 identifies the direction in which the features exist from the location information about the features found in the process in step S303, and determines whether the features are visible by performing image analysis on the camera image obtained by imaging the direction with the vehicle exterior camera 219.

Next, the control unit 211 determines whether an anthropomorphic feature has been successfully identified in the process in step S305 (step S306). If the control unit 211 determines that any anthropomorphic feature has not been successfully identified (or there are no visible features in the camera image captured from the current location) (step S306: NO), the control unit 211 proceeds to the process in step S309. If the control unit 211 determines that an anthropomorphic feature has been successfully identified (step S306: YES), on the other hand, the control unit 211 proceeds to the process in step S307.

As described above, in the on-vehicle device 200 according to the present embodiment, the control unit 211 (an example of the "content acquisition unit", the "user information acquisition unit", the "anthropomorphic feature identification unit", and the "output control unit") acquires content of which the user is to be notified from among a plurality of pieces of content classified by the content type (step S101 in Fig. 8), acquires current location information about the user (step S102 in Fig. 8), identifies, as an anthropomorphic feature, a feature that exists within a predetermined distance from the current location of the user and is permitted to issue an utterance of the content type of the content acquired in the process in step S101, on the basis of the feature table 230 (an example of the "feature-related information") in which a feature's utterance-permitted content type (an example of the content type information for permitting an utterance) and the location of the feature (an example of the "location information") are associated with each of feature among a plurality of features (step S106 in Fig. 8), and performs control to have sound localization performed on the voice corresponding to the content acquired in the process in step S101 so that the voice can be heard from the direction in which the anthropomorphic feature exists as viewed from the user, and cause the voice to be output (step S109 in Fig. 8).

Accordingly, by the on-vehicle device 200, the voice corresponding to the content of which the user is to be notified, which is of the content type for which an utterance is permitted for the feature, is output from the direction in which the feature exists as viewed from the user. Thus, it is possible to give the user a feeling as if a feature that would not give a feeling of strangeness even when speaking the content of which the user is to be notified were actually speaking the content.

Also, in the on-vehicle device 200 according to the present embodiment, the control unit 211 acquires the content of which the user is to be notified, from among a plurality of pieces of content (step S201 in Fig. 9 and step S301 in Fig. 10), acquires current location information about the user (step S202 in Fig. 9 and step S302 in Fig. 10), identifies a feature visible in the current situation from the current location of the user as an anthropomorphic feature from among a plurality of features (step S207 in Fig. 9 and step S305 in Fig. 10), and performs control to have sound localization performed on the voice corresponding to the content acquired in the process in step S201 (step S301) so that the voice can be heard from the direction in which the anthropomorphic feature exists as viewed from the user, and cause the voice to be output (step S210 in Fig. 9 and step S308 in Fig. 10).

Accordingly, by the on-vehicle device 200, the voice corresponding to the content of which the user is to be notified is output from the direction in which a feature visible to the user at that point of time exists. Thus, it is possible to give the user a feeling as if the feature visible to the user were speaking the content of which the user is to be notified.

Further, in the on-vehicle device 200 according to the present embodiment, the control unit 211 identifies, as an anthropomorphic feature, a feature that exists within a predetermined distance from the current location of the user and is permitted to utter at the time and in the weather at that time, on the basis of the feature table 230 (an example of the "feature-related information") in which environmental conditions (an example of the "environmental condition information") including an utterance-permitted time (an example of the "time conditions for permitting an utterance") and an utterance-permitted weather (an example of the "weather conditions for permitting an utterance"), and a location (an example of the "location information") are associated with each feature among a plurality of features (step S207 in Fig. 9). Accordingly, the voice corresponding to the content of which the user is to be notified is output from the direction in which a feature satisfying the time and weather conditions for the user to see the feature at that point of time exists. Thus, it is possible to give the user a feeling as if the feature visible to the user were speaking the content of which the user is to be notified.

Furthermore, in the on-vehicle device 200 according to the present embodiment, the control unit 211 identifies a feature recognizable in a camera image (an example of an "image") captured from the current location of the user as an anthropomorphic feature (step S305 in Fig. 10). Accordingly, the voice corresponding to the content of which the user is to be notified is output from the direction in which a feature determined to be visible to the user at that point of time on the basis of the camera image exists. Thus, it is possible to give the user a feeling as if the feature visible to the user were speaking the content of which the user is to be notified.

Furthermore, in the on-vehicle device 200 according to the present embodiment, the control unit 211 (an example of a "voice data generation unit") generates voice data corresponding to the voice, on the basis of the voice characteristics data associated with each feature among a plurality of features (step S108 in Fig. 8, step S209 in Fig. 9, and step S307 in Fig. 10). Accordingly, the voice corresponding to the content to be output has characteristics matching the anthropomorphic feature, and thus, the user can have a feeling as if the anthropomorphic feature were speaking the content without a feeling of strangeness.

Further, in the on-vehicle device 200 according to the present embodiment, in a case where the control unit 211 has failed to identify an anthropomorphic feature (step S107 in Fig. 8: NO, step S208 in Fig. 9: NO, and step S306 in Fig. 10: NO), the control unit 211 generates voice data corresponding to the voice on the basis of standard voice characteristics data (an example of "predetermined voice characteristics data") (step S110 in Fig. 8, step S211 in Fig. 9, and step S309 in Fig. 10). Thus, even in a case where any anthropomorphic feature is not successfully identified, the content of which the user is to be notified can be provided to the user.

### [1.4. Modifications]

Next, modifications of the first embodiment are described. Note that the modifications described below can be combined as appropriate.

### [1.4.1. Modification 1]

In the first embodiment, environmental conditions that are "utterance-permitted times" and "utterance-permitted weathers" are registered in the feature table 230, and a feature for which both the current time and the weather satisfy the environmental conditions that are the "utterance-permitted time" and the "utterance-permitted weather" is identified as an anthropomorphic feature. Alternatively, only "utterance-permitted times" may be registered as environmental conditions in the feature table 230, and a feature in which the current time satisfies the "utterance-permitted time" may be identified as an anthropomorphic feature. Also, only "utterance-permitted weathers" may be registered as environmental conditions in the feature table 230, and a feature in which the current weather satisfies the "utterance-permitted weather" may be identified as an anthropomorphic feature.

### [1.4.2. Modification 2]

In the first embodiment, a feature that exists within a predetermined distance from the current location of the user and satisfies the condition that an utterance of the content type of the content acquired in the process in step S101 in Fig. 8 is permitted is identified as an anthropomorphic feature. However, a condition that at least one of the current time and the weather satisfies at least one of the environmental conditions that are an "utterance-permitted time" and an "utterance-permitted weather", or that it is visible from a camera image captured from the current location of the user may be further added to this condition. The condition added here is a condition for making a feature that is visible to the user an anthropomorphic feature. Accordingly, a feature that is permitted to issue an utterance of the content type of the content acquired in the process in step S101 in Fig. 8 and is visible to the user can be identified as an anthropomorphic feature. Thus, it is possible to prevent a feature that is invisible to the user from speaking, and cause the feature that is visible to the user to speak in the voice corresponding to the content.

### [1.4.3. Modification 3]

In the first embodiment, in the process in step S103 in Fig. 8, step S203 in Fig. 9, and step S303 in Fig. 10, the control unit 211 searches for a feature existing within a predetermined distance from the current location of the user. However, the control unit 211 may search for a feature that exists within a predetermined distance from the current location of the user and further exists in the direction in which the user faces (or the direction in which the user is traveling). For this purpose, the control unit 211 acquires beforehand the direction in which the user faces from the orientation of the face of the user with an in-vehicle camera (not illustrated), for example, or acquires the traveling direction of the user from absolute orientation data received from the GPS reception unit 218, for example. Thus, a feature that exists in the direction in which the user faces or in the direction in which the user is traveling, and is easily visible to the user can be identified as an anthropomorphic feature.

### [1.4.4. Modification 4]

An "effective range" may be provided for each feature in the feature table 230. In the "effective range", a distance from the current location of the user at which a feature can be selected as an anthropomorphic feature is registered. For example, in a case where two kilometers is registered as the "effective range", a feature is not to be selected as an anthropomorphic feature unless the feature exists within two kilometers from the current location of the user. The "effective range" can be set in accordance with the size or the like of the feature. Thus, a feature that is visible to the user can be identified as an anthropomorphic feature, with the size or the like of the feature being taken into consideration.

### [1.4.5. Modification 5]

In the first embodiment, the control unit 211 searches for a feature existing within a predetermined distance from the current location of the user in the process in step S303 in Fig. 10, and performs the process in step S305 in Fig. 10 in a case where the result of the determination in the process in step S304 in Fig. 10 is "YES". However, the processes in steps S303 and S304 may be skipped, and a feature visible in a camera image captured from the current location may be identified as an anthropomorphic feature in the process in step S305. That is, even if the feature does not exist within the predetermined distance from the current location of the user, the feature may be identified as an anthropomorphic feature as long as the feature is visible in the camera image.

### [1.4.6. Modification 6]

Although the anthropomorphic feature utterance processes illustrated in Figs. 8 to 10 are performed by the control unit 211 in the first embodiment, at least part of these processes may be performed in cooperation with an external server device or the like to share the processing load.

### [2. Second Embodiment]

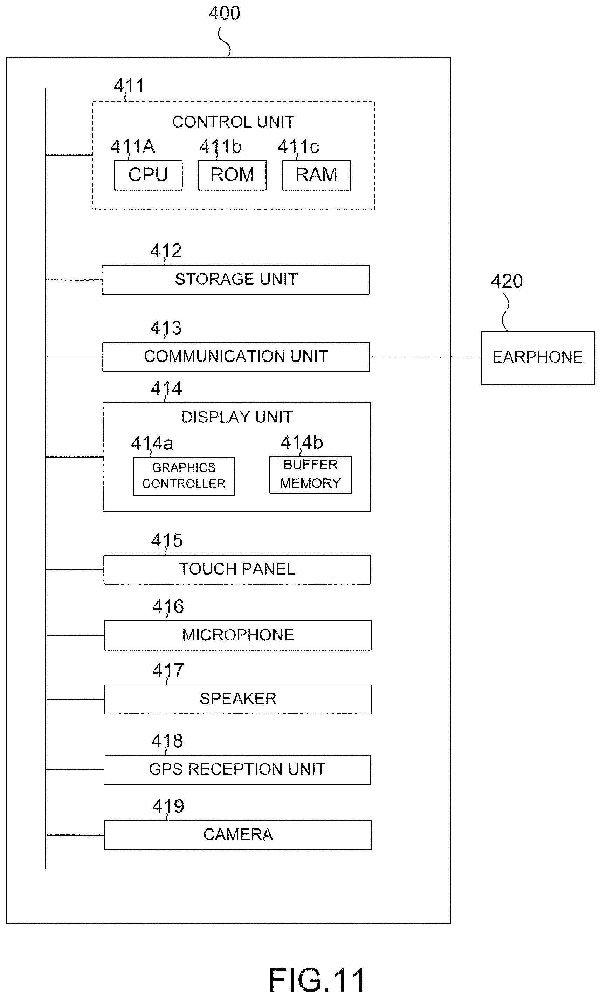

Next, a second embodiment is described with reference to Fig. 11. In the first embodiment, a case where the information processing device is the on-vehicle device 200 has been described. In the second embodiment, a case where the information processing device is a smartphone 400 as a portable information processing device is described, with the focus being put on differences from the first embodiment. Note that, in the second embodiment, a case where a voice of an anthropomorphic feature is output from earphones that are a voice output device is described.

### [2.1. Configuration of the Smartphone 400]

Fig. 11 is a block diagram illustrating an example configuration of the smartphone 400 of the user.

The smartphone 400 includes a control unit 411, a storage unit 412 formed with an SSD or the like, a communication unit 413, a display unit 414, a touch panel 415, a microphone 416, a speaker 417, a GPS reception unit 418, and a camera 419.

The control unit 411 corresponds to the control unit 211 of the first embodiment, and includes a CPU 411a that controls the entire control unit 411, a ROM 411b in which a control program and the like for controlling the control unit 411 are stored in advance, and a RAM 411c that temporarily stores various kinds of data. The control unit 411 or the CPU 411a corresponds to a "computer".

The storage unit 412 corresponds to the storage unit 212 of the first embodiment, and stores various programs such as an OS and application programs, and data and information to be used in the various programs. Also, a browser and dedicated applications for various services are installed in the storage unit 412. Note that the various programs may be acquired from a server device or the like via a network, for example, or may be read from a recording medium such as a USB memory.

The communication unit 413 corresponds to the communication unit 213 of the first embodiment, includes a wireless communication device or the like, and communicates with another information processing device having a communication function, to mutually transmit and receive data. Also, the communication unit 413 wirelessly communicates with earphones 420.

The earphones 420 correspond to the speakers 217 of the first embodiment, and are worn on the user's ears. The earphones 420 include a geomagnetic sensor and a 3G acceleration sensor for identifying the direction in which the user faces, and, in place of the speakers 217 of the first embodiment, perform sound localization on a voice of an anthropomorphic feature. The CPU 411a performs a process for realizing the sound localization by the earphones 420. That is, the CPU 411a realizes the sound localization of the voice of the anthropomorphic feature. Also, the sound image localization of the voice is displaced in accordance with a relative change in location between the user and the anthropomorphic feature due to movement of the user. Thus, the voice of the anthropomorphic feature always comes from the direction of the anthropomorphic feature. Note that the process for realizing the sound localization by the earphones 420 may be performed by an audio processor or the like provided separately from the CPU 411a.

The display unit 414 corresponds to the display unit 214 of the first embodiment, and includes a graphics controller 414a and a buffer memory 414b formed with a memory such as a video RAM (VRAM). In this configuration, the graphics controller 414a controls the display unit 414 and the touch panel 415, on the basis of control information sent from the control unit 411. Meanwhile, the buffer memory 414b temporarily stores image data that can be immediately displayed on each touch panel 415. An image is then displayed on the touch panel 415, on the basis of the image data output from the graphics controller 414a.

The touch panel 415 corresponds to the touch panel 215 of the first embodiment, and displays an image on the basis of the image data received from the display unit 414. Also, the touch panel 415 detects an operator's touch operation, and transmits touch operation data indicating the touched position or the like to the control unit 411. The control unit 411 determines which operation has been performed on the basis of the touch operation data, and performs processing in accordance with the operation content.

The microphone 416 corresponds to the in-vehicle microphone 216 of the first embodiment, converts the voice of the user into an electrical signal, and outputs the electrical signal to the control unit 411.

Under the control of the control unit 411, the speaker 417 outputs sound in a case where the earphones 420 are not connected thereto, for example.

The GPS reception unit 418 corresponds the GPS reception unit 218 of the first embodiment, receives navigation radio waves from a GPS satellite, and acquires GPS positioning data that are latitude, longitude, and altitude data, absolute orientation data of the traveling direction, GPS speed data, and the like, which are current location information about the smartphone 400.

The camera 419 outputs a captured camera image to the control unit 211.

### [2.2. Anthropomorphic Feature Utterance Process]

An anthropomorphic feature utterance process in the second embodiment is substantially the same as that in the first embodiment. Note that, in pattern 3 among the three methods for identifying an anthropomorphic feature, a feature that can be visually recognized by the user from a camera image is identified as an anthropomorphic feature. In the second embodiment, however, it is not realistic for the user to constantly capture images of the surroundings with the camera 419. Therefore, instead of the camera 419, camera-attached smart glasses, which are a glasses-like wearable device, may be connected to the smartphone 400 and be inserted by the user, for example. The camera of the smart glasses captures an image of the direction in which the user faces, and transmits the camera image to the smartphone 400, so that the control unit 411 of the smartphone 400 identifies a feature that can be visually recognized by the user from the received camera image. Also, with the smart glasses including a geomagnetic sensor and a 3G acceleration sensor, it is also possible to identify the direction in which the user faces.

As described above, in the smartphone 400 according to the second embodiment, the control unit 411 (an example of the "content acquisition unit", the "user information acquisition unit", the "anthropomorphic feature identification unit", and the "output control unit") acquires content of which the user is to be notified from among a plurality of pieces of content classified by the content type (step S101 in Fig. 8), acquires current location information about the user (step S102 in Fig. 8), identifies, as an anthropomorphic feature, a feature that exists within a predetermined distance from the current location of the user and is permitted to issue an utterance of the content type of the content acquired in the process in step S101, on the basis of the feature table 230 (an example of the "feature-related information") in which a feature's utterance-permitted content type (an example of the content type information for permitting an utterance) and the location of the feature (an example of the "location information") are associated with each of feature among a plurality of features (step S106 in Fig. 8), and performs control to have sound localization performed on the voice corresponding to the content acquired in the process in step S101 so that the voice can be heard from the direction in which the anthropomorphic feature exists as viewed from the user, and cause the voice to be output (step S109 in Fig. 8).

Accordingly, by the smartphone 400, the voice corresponding to the content of which the user is to be notified, which is of the content type for which an utterance is permitted for the feature, is output from the direction in which the feature exists as viewed from the user. Thus, it is possible to give the user a feeling as if a feature that would not give a feeling of strangeness even when speaking the content of which the user is to be notified were actually speaking the content.

Also, in the smartphone 400 according to the present embodiment, the control unit 411 acquires the content of which the user is to be notified, from among a plurality of pieces of content (step S201 in Fig. 9 and step S301 in Fig. 10), acquires current location information about the user (step S202 in Fig. 9 and step S302 in Fig. 10), identifies a feature visible in the current situation from the current location of the user as an anthropomorphic feature from among a plurality of features (step S207 in Fig. 9 and step S305 in Fig. 10), and performs control to have sound localization performed on the voice corresponding to the content acquired in the process in step S201 (step S301) so that the voice can be heard from the direction in which the anthropomorphic feature exists as viewed from the user, and cause the voice to be output (step S210 in Fig. 9 and step S308 in Fig. 10).

Accordingly, by the smartphone 400, the voice corresponding to the content of which the user is to be notified is output from the direction in which a feature visible to the user at that point of time exists. Thus, it is possible to give the user a feeling as if the feature visible to the user were speaking the content of which the user is to be notified.

### [2.3. Modifications]

The modifications of the first embodiment can be applied to the second embodiment as appropriate. Note that the respective modifications can be combined as appropriate.

### Reference Signs List

100 : information processing device
101 : content acquisition unit
102 : user information acquisition unit
103 : anthropomorphic feature identification unit
104 : output control unit
200 : on-vehicle device
211 : control unit
211a : CPU
211b : ROM
211c : RAM
212 : storage unit
213 : communication unit
214 : display unit
214a : graphics controller
214b : buffer memory
215 : touch panel
216 : in-vehicle microphone
217A : speaker
217B : speaker
217C : speaker
217D : speaker
217E : speaker
217F : speaker
217G : speaker
217H : speaker
218 : GPS reception unit
219 : vehicle exterior camera
230 : feature table
231 : driver's seat
232 : passenger seat
233 : rear seat
240 : content type table
250 : content table
400 : smartphone
411 : control unit
411a : CPU
411b : ROM
411c : RAM
412 : storage unit
413 : communication unit
414 : display unit
414a : graphics controller
414b : buffer memory
415 : touch panel
416 : microphone
417 : speaker
418 : GPS reception unit
419 : camera
420 : earphones
F1 : OX tower
F2 : memorable traffic light
F3 : statue of Takamori Saigo
F4 : cat monument
F5 : stone statue
RC : vehicle

## Claims

1. An information processing device comprising:
a content acquisition unit that acquires content of which a user is to be notified, from among a plurality of pieces of content classified by content type;
a user information acquisition unit that acquires current location information about the user;
an anthropomorphic feature identification unit that identifies, as an anthropomorphic feature, a feature that exists within a predetermined distance from a current location of the user and is permitted to issue an utterance of a content type of the content acquired by the content acquisition unit, on a basis of feature-related information in which content type information for permitting an utterance by the feature and location information about the feature are associated with each of feature among a plurality of features; and
an output control unit that performs control to have sound localization performed on a voice corresponding to the content acquired by the content acquisition unit so that the voice is heard from a direction in which the anthropomorphic feature exists as viewed from the user, and cause the voice to be output.

2. The information processing device according to claim 1, wherein
the anthropomorphic feature identification unit identifies, as the anthropomorphic feature, the feature that exists within the predetermined distance from the current location of the user and is permitted to issue an utterance of the content type of the content acquired by the content acquisition unit, the feature further existing in a direction in which the user faces or in a direction in which the user is traveling.

3. The information processing device according to claim 1 or 2, further comprising:
a voice data generation unit that generates voice data corresponding to the voice, on a basis of voice characteristics data associated with each feature of the plurality of features.

4. The information processing device according to claim 3, wherein,
in a case where the anthropomorphic feature identification unit has failed to identify the anthropomorphic feature, the voice data generation unit generates the voice data corresponding to the voice on a basis of predetermined voice characteristics data.

5. An information processing method implemented by an information processing device, the information processing method comprising:
a content acquisition step of acquiring content of which a user is to be notified, from among a plurality of pieces of content classified by content type;
a user information acquisition step of acquiring current location information about the user;
an anthropomorphic feature identification step of identifying, as an anthropomorphic feature, a feature that exists within a predetermined distance from a current location of the user and is permitted to issue an utterance of a content type of the content acquired in the content acquisition step, on a basis of feature-related information in which content type information for permitting an utterance by the feature and location information about the feature are associated with each of feature among a plurality of features; and
an output control step of performing control to have sound localization performed on a voice corresponding to the content acquired in the content acquisition step so that the voice is heard from a direction in which the anthropomorphic feature exists as viewed from the user, and cause the voice to be output.

6. An information processing program for causing a computer in an information processing device to function as:
a content acquisition unit that acquires content of which a user is to be notified, from among a plurality of pieces of content classified by content type;
a user information acquisition unit that acquires current location information about the user;
an anthropomorphic feature identification unit that identifies, as an anthropomorphic feature, a feature that exists within a predetermined distance from a current location of the user and is permitted to issue an utterance of a content type of the content acquired by the content acquisition unit, on a basis of feature-related information in which content type information for permitting an utterance by the feature and location information about the feature are associated with each of feature among a plurality of features; and
an output control unit that performs control to have sound localization performed on a voice corresponding to the content acquired by the content acquisition unit so that the voice is heard from a direction in which the anthropomorphic feature exists as viewed from the user, and cause the voice to be output.
